# EUROPÄISCHE PATENTSCHRIFT

(11) **EP 1 147 952 B1**
(45) Veröffentlichungstag und Bekanntmachung des Hinweises auf die Patenterteilung: **03.05.2006**
(21) Anmeldenummer: 01104664.6
(22) Anmeldetag: 24.02.2001
(51) Int. Cl.: B60R 25/00

(54) **Verfahren und Vorrichtung zur Überprüfung, ob eine Anforderung zur Freigabe einer Funktion einer Einrichtung berechtigt ist**
Method and device checking the validity of a request to enable a function in a device
Procédé et dispositif pour vérifier la validité d'une demande de libération d'une fonction d'un appareil

(30) Priorität: 20.04.2000 DE 10019750
(43) Veröffentlichungstag der Anmeldung: 24.10.2001
(73) Patentinhaber: Delphi Technologies, Inc., Troy, MI 48007 (US)
(72) Erfinder: Lamprecht, Karl-Friedrich, 58566 Kierspe (DE)
(74) Vertreter: Cohausz & Florack

(56) Entgegenhaltungen:
- EP-A- 0 926 021
- EP-A- 0 937 845
- EP-A- 0 992 408

## Beschreibung

Die vorliegende Erfindung betrifft ein Verfahren sowie eine Vorrichtung zur Überprüfung der Berechtigung einer Freigabeanforderung für eine Einrichtung, insbesondere für die Zentralverriegelung, die Wegfahrsperre oder die Alarmanlage eines Fahrzeugs.

Aus EP 0 937 845 A1 ist ein Freigabesystem zur Überprüfung, ob eine Anforderung von Funktionen einer Einrichtung berechtigt ist, bekannt. Bei diesem Freigabesystem wird einrichtungsseitig durch einen ersten Generator ein erster, sich schrittweise ändernder Code generiert, sowie mit einer Fernbedienung durch einen zweiten Generator ein zweiter, sich schrittweise ändernder Code generiert. Das Freigabesystem verfügt über Mittel zum Übertragen des generierten zweiten Codes über eine Funkstrecke an die Einrichtung sowie einen Transponder, der geeignet ist, die Fernbedienung gegenüber der Einrichtung zu authentifizieren.

Zur Kommunikation zwischen Fahrzeug und Fernbedienung weist die Fernbedienung Mittel zum Übertragen von Informationen über eine Funkstrecke auf, sowie einen Transponder, der geeignet ist, ohne Bedarf an Energie aus der Fernbedienung Signale von dem Fahrzeug zu empfangen und Signale an das Fahrzeug zu senden. Das Fahrzeug weist Mittel zum Empfangen von Funksignalen und Mittel zum Übertragen von Aktivierungsenergie und Signalen an den Transponder der Fernbedienung sowie zum Empfangen von vom Transponder ausgesandten Signalen auf.

Nachteilig bei diesem Freigabesystem ist einerseits die herkömmliche Erzeugung der Übertragungsfrequenzen mit Hilfe von Phase Locked Loops mit festen Loop-Teiler-Faktoren und andererseits die fehlende Ortsauflösung des in der Einrichtung empfangenen, von der Fernbedienung ausgesendeten Signals.

Der vorliegenden Erfindung liegt daher die Aufgabe zugrunde, die Sende- und Empfangsfrequenzen mit einfachen Mitteln zu erzeugen sowie eine Ortsauflösung des von der Fernbedienung ausgesendeten Signals zu ermöglichen.

Diese Aufgabe wird dadurch gelöst, daß in einer Fernbedienung, mittels der die Freigabeanforderung für die Einrichtung ausgelöst werden soll, ein Trägersignal zur Verfügung gestellt wird, dessen Frequenz periodisch geändert wird, daß das Trägersignal mit einem vorzugsweise binären Datensignal moduliert und von der Fernbedienung zur Einrichtung übertragen wird, daß das empfangene Signal hinsichtlich seiner Signalfrequenz mit der Frequenz eines in der Einrichtung vorhandenen, seine Frequenz entgegengesetzt zur Frequenz des Trägersignals ändernden Empfangssignals verglichen wird, daß bei Frequenzgleichheit zwischen der Empfangsfrequenz und der modulierten Trägerfrequenz die Empfangsfrequenz mit der Frequenz des modulierten Trägersignals synchronisiert wird, daß aus dem empfangenen Signal das Datensignal demoduliert wird, und daß bei Übereinstimmung des Datensignals mit einem in der Einrichtung vorhandenen Vergleichsignals die Einrichtung des Fahrzeugs freigegeben wird. Dadurch, daß die Empfangsfrequenz sich entgegengesetzt zur Änderung der Trägerfrequenz ändert, wird einrichtungsseitig eine sehr schnelle Korrelation zwischen der Empfangsfrequenz und der Trägerfrequenz erreicht. Durch die Zuhilfenahme einer Frequenzstelleinrichtung kann die Empfangsfrequenz an die Frequenz des Trägersignals angepaßt werden. Aus diesem Grunde kann der Empfangskanal eines Korrelationsempfängers der Einrichtung sehr schmal gehalten werden. Aus dem modulierten Trägersignal kann nun das Datensignal demoduliert werden. Mit Hilfe des Datensignals ist es möglich zu überprüfen, ob die Freigabeanforderung zur Freigabe einer Einrichtung berechtigt ist, in dem das Datensignal mit einem im Fahrzeug vorhandenen Vergleichssignal verglichen wird. Dieses Übertragungsverfahren kann mit Hilfe von handelsüblichen integrierten Schaltkreisen verwirklicht werden.

Die Änderung der Empfangsfrequenz sowie der Frequenz des Trägersignals wird mit Hilfe eines Phase Locked Loops realisiert. Diese Änderung kann sowohl linear verlaufen, in einer sog. Rampenfunktion, als auch nichtlinear. Dabei ist vorteilhaft, daß mit Hilfe einer im Regelkreis des Phase Locked Loops angelegten Spannung die Empfangsfrequenz und die Frequenz des Trägersignals periodisch geändert werden. Durch die Verwendung eines Phase Locked Loops kann in sehr einfacher Weise die Frequenz des Trägersignals und die Frequenz des Empfangssignals gesteuert werden. So ist es insbesondere möglich, den Kondensator des Phase Locked Loops mit einem sich periodisch ändernden Lade-/Entladestroms zu beaufschlagen. Dazu ist es vorteilhaft, den Regelkreis des Phase Locked Loops aufzutrennen.

Daß die Periodendauer der Frequenzänderung des Trägersignals mit Hilfe eines Microcontrollers bestimmt wird, ist eine Ausgestaltung des erfindungsgemäßen Verfahrens. Durch die Verwendung des Microcontrollers kann die Periodendauer des Frequenzsweeps des Trägersignals eingestellt werden.

Die Periodendauer der Änderung der Empfangsfrequenz kann mit Hilfe eines Synchronisationssignals bestimmt werden. Weiterhin kann die Periodendauer der Änderung der Empfangsfrequenz aus dem Verlauf des Trägersignals abgeleitet werden. Durch die Anpassung der Empfangsfrequenz an das modulierte Trägersignal, insbesondere an dessen Sweep-Frequenz, kann einrichtungsseitig der Empfangskanal schmalbandig betrieben werden. Die Synchronisation zwischen der Empfangsfrequenz und dem moduliertem Trägersignal ermöglicht die Demodulation der Daten.

In einer weiteren Ausgestaltung des erfindungsgemäßen Verfahrens wird das Datensignal derart auf das Trägersignal moduliert, daß die Richtung der Frequenzänderung des Trägersignals in Abhängigkeit vom Datensignal geändert wird. Weiterhin kann das Datensignal derart auf das Trägersignal moduliert werden, daß die Bit-Frequenz des Datensignals mit der Periodendauer des Trägersignals synchronisiert wird. Dadurch läßt sich in einfacher Weise eine bipolare Datenübertragung realisieren.

Daß das Trägersignal einrichtungsseitig generiert und ausgesendet wird, als auch daß das Trägersignal in der Fernbedienung mit Hilfe eines Transponders empfangen wird, sind weitere Ausgestaltungen des erfindungsgemäßen Verfahrens. Es besteht die Möglichkeit, mit Hilfe des Transponders sowohl das Trägersignal zu empfangen als auch das modulierte Trägersignal auszusenden.

Ein in der Fernbedienung generiertes Trägersignal hat den Vorteil, daß das Fahrzeug nicht ununterbrochen das Trägersignal aussenden muß, sondern lediglich bei Empfang des von der Fernbedienung ausgestrahlten Signals die Empfangseinrichtung aktivieren muß.

In einer weiteren bevorzugten Ausführungsform wird das Trägersignal von der Einrichtung an die Fernbedienung gesendet, die Frequenz des Trägersignals um eine Injektionsfrequenz verschoben, das verschobene Trägersignal mit dem Zusatzdatensignal moduliert, das verschobene und modulierte Trägersignal an die Einrichtung gesendet, das empfangene, verschobene und modulierte Trägersignal in der Einrichtung um die Injektionsfrequenz zurückverschoben, aus dem modulierten Signal die Zusatzdaten demoduliert und mit Hilfe einer Vergleichseinheit das empfangene Trägersignal mit dem ausgesendeten Trägersignal verglichen. Zunächst ist es durch die Verschiebung des Trägersignals um die Injektionsfrequenz möglich, das vom Fahrzeug ausgesendete Signal von dem von der Fernbedienung ausgesendeten Signal zu unterscheiden, da eine Interferenz der Signale vermieden wird. Außerdem kann einrichtungsseitig neben dem Datensignal auch eine Information über die Entfernung zwischen Fernbedienung und Einrichtung ermittelt werden. Neben dem bereits vorhandenen Trägersignal wird eine weitere Frequenz von der Einrichtung ausgesendet. Diese Frequenz kann insbesondere bei 125 KHz, bzw. 13,56 MHz liegen. Nachdem das Trägersignal moduliert und mit der Injektionsfrequenz gemischt worden ist, kann dieses wiederum an die Einrichtung gesendet werden.

Einrichtungsseitig wird das empfangene Signal mit der gleichen Injektionsfrequenz zurückgemischt. Nun kann einerseits aus dem so erhaltenen Signal das Datensignal demoduliert werden und andererseits kann durch Vergleich der Frequenzen des ausgesendeten Signals und des empfangenen Signals die Entfernung zwischen der Einrichtung und der Fernbedienung ermittelt werden.

Es ist bevorzugt, daß die Frequenz des Trägersignals mit der Frequenz des empfangenen Trägersignals in der Vergleichseinheit gemischt wird und daß aus der Frequenzdifferenz die Entfernung zwischen der Einrichtung und der Fernbedienung ermittelt wird. Hierbei wird mit Hilfe eines FM-Diskriminators der Phasenshift zwischen der ausgesendeten und der empfangenen Frequenz in einen Frequenzunterschied transponiert, wodurch eine Phasendifferenz- oder Pulslaufzeit-Messung, welche schwierig zu implementieren ist, vermieden werden kann. Der Frequenzunterschied ermöglicht nun eine Aussage über die Entfernung zwischen der Einrichtung und der Fernbedienung. Der Realisierungsaufwand für das erfindungsgemäße Verfahren wird durch die Verwendung des FM-Diskriminators erheblich reduziert.

Ein weiterer Gegenstand der Erfindung ist eine Vorrichtung zur Überprüfung, ob eine Anforderung zur Freigabe einer Funktion einer Einrichtung berechtigt ist, insbesondere zur Verwirklichung eines Verfahrens nach einem der Ansprüche 1 bis 15, welche sich dadurch auszeichnet, daß die Einrichtung Mittel zum Senden des Trägersignals sowie Mittel zum Empfangen eines modulierten Trägersignals aufweist, und daß die Einrichtung einen Phase Locked Loop zur Erzeugung eines seine Frequenz änderndes Trägersignals aufweist, wobei der Regelkreis des Phase Locked Loops aufgetrennt und mit einem periodischen Lade-/Entladestrom beaufschlagt ist, und daß die Einrichtung eine automatische Frequenz-Stelleinrichtung aufweist, wobei die automatische Frequenz-Stelleinrichtung eine Empfangsfrequenz mit dem empfangenen Trägersignal synchronisiert, und daß eine Fernbedienung Mittel zum Empfangen eines Trägersignals sowie zum Senden eines modulierten Trägersignals und Mittel zum Modulieren des Trägersignals mit einem Datensignal aufweist. Dadurch, daß die Einrichtung eine automatische Frequenz-Stelleinrichtung aufweist, muß die Frequenzregelung des Trägersignals nicht sehr genau sein. Diese kann hierdurch mit Hilfe eines Phase Locked Loops erzeugt werden, wobei der Regelkreis des Phase Locked Loops aufgetrennt ist und in den Regelkreis ein Lade-/Entladestrom eingekoppelt wird. Die Fernbedienung weist Mittel zum Empfangen sowie zum Senden des Trägersignals auf. Diese Mittel können aus einem Transponder bestehen. Die beschriebene Vorrichtung läßt sich mit handelsüblichen integrierten Schaltungen kostengünstig realisieren.

Um eine Aussage über die Entfernung zwischen Fernbedienung und Einrichtung treffen zu können, wird vorgeschlagen, daß die Einrichtung Mittel zum Versenden eines Injektionssignals und Mittel zum Mischen eines empfangenen Signals mit dem Injektionssignal, sowie Mittel zum Vergleich der Frequenz des gesendeten Trägersignals mit der Frequenz des empfangenen, um das Injektionssignal und das Zusatzdatensignal bereinigten Trägersignals aufweist, und daß die Fernbedienung einen Transponder aufweist, wobei der Transponder das Trägersignal und die Injektionsfrequenz empfängt und das modulierte Trägersignal aussendet und daß die Fernbedienung Mittel zum Mischen des Trägersignals mit dem Injektionssignal sowie Mittel zum Modulieren des Trägersignals mit dem Zusatzdatensignal aufweist. In der Einrichtung liegen zwei Signale vor, die ihre Frequenz periodisch ändern. Dadurch, daß das Trägersignal mit dem Injektionssignal in der Fernbedienung gemischt wird, kommt es auf der Funkstrecke zu keinen Interferenzen und das modulierte Trägersignal kann zweifelsfrei von der Einrichtung empfangen werden. Durch die Laufzeitdifferenz weisen die beiden Signale eine Phasendifferenz auf, die proportional zur Entfernung zwischen Fernbedienung und Einrichtung ist. Da eine Phasendifferenzmessung hier sehr aufwendig ist, weil der Phasenshift zwischen den beiden Signalen im Nanosekundenbereich liegt, wird durch die erfindungsgemäße Vorrichtung der Frequenzunterschied zwischen den beiden Signalen genutzt. Dieser Frequenzunterschied läßt sich mit Hilfe z.B. eines FM-Diskriminators ermitteln. Die Verschiebung der Frequenz-Sweeps gegeneinander ist proportional zur Laufzeit des Signals und somit zur Entfernung zwischen Fernbedienung und Fahrzeug.

Die Erfindung wird im folgenden anhand eines Ausführungsbeispiels unter Bezugnahme auf Zeichnungen näher erläutert. Dabei zeigen:
- Fig. 1: die Frequenzänderung der übermittelten Signale in einer zeitlichen Auflösung,
- Fig. 2: ein Blockschaltbild einer erfindungsgemäßen Datenübertragung,
- Fig. 3: eine erfindungsgemäße Datenübertragung mit zusätzlicher Ermittlung der Entfernung zwischen Fernbedienung und Einrichtung.

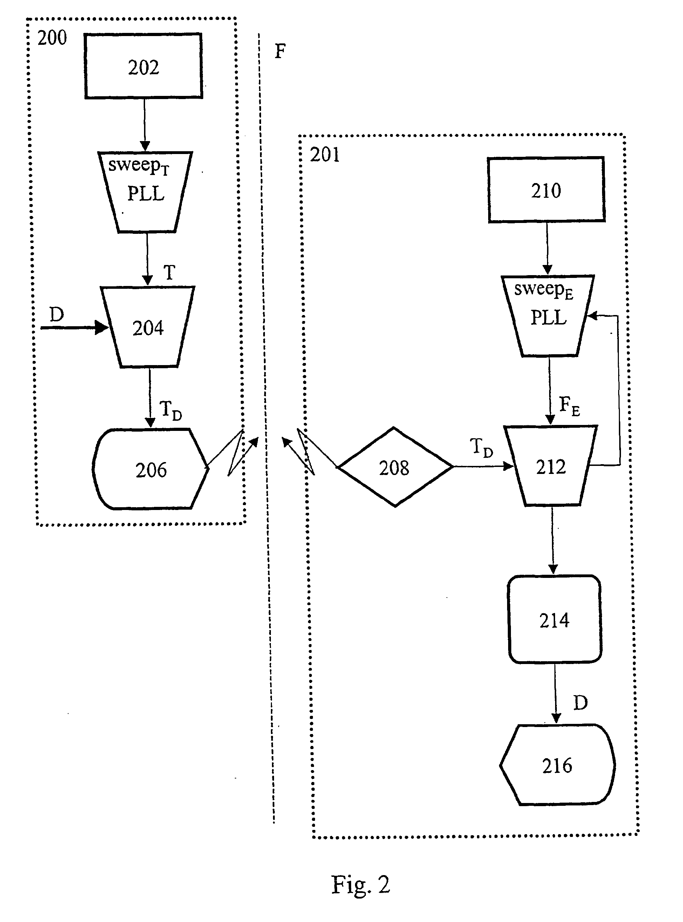

Fig. 2 zeigt schematisch ein erfindungsgemäßes Verfahren. Hierbei wird zwischen der Fernbedienung 200 und der Einrichtung 201 ein Signal über die Luftschnittstelle F übermittelt. In der Einheit 202 wird ein Steuersignal zur Erzeugung des Frequenzsweeps sweep, des Trägersignals T generiert. Dieses Steuersignal wird in den Regelkreis des Phase Locked Loops PLL eingespeist. Im Phase Locked Loop PLL wird mit Hilfe des Steuersignals der Frequenzsweep sweep_{T} des Trägersignals erzeugt. Das so erzeugte Trägersignal T wird der Einheit 204 zugeführt. In der Einheit 204 wird das Trägersignal T mit dem Datensignal D moduliert und das modulierte Trägersignal T_{D} wird der Einheit 206 zugeführt. Mit Hilfe der Einheit 206 wird nun das modulierte Trägersignal T_{D} über die Luftschnittstelle F an die Einrichtung 201 übermittelt. In der Einrichtung 201 wird das von der Fernbedienung 200 ausgesendete, modulierte Trägersignal T_{D} mit Hilfe der Einheit 208 empfangen. In der Einheit 210 wird ein Steuersignal für den Phase Locked Loop PLL der Einrichtung erzeugt. Dieses Steuersignal wird in den Regelkreis des Phase Locked Loops PLL eingekoppelt. Abhängig vom Steuersignal wird im Phase Locked Loop PLL der Frequenzsweep sweep_{E} erzeugt. Das so erzeugte Empfangssignal E wird der Einheit 212 zugeführt. Zusätzlich wird der Einheit 212 das empfangene Trägersignal T_{D} von der Einheit 208 zugeführt. Bei Frequenzgleichheit zwischen der Frequenz des Eingangssignals T_{D} und der Frequenz des Empfangssignals F_{E} wird die Richtung der Frequenzänderung des Empfangssignals sweep_{E} umgekehrt. Dies geschieht durch ein Steuersignal, welches von der Einheit 212 an den Phase Locked Loop PLL gesendet wird. Nun wird das Empfangssignal F_{E} mit dem empfangenen Signal T_{D} synchronisiert und das synchronisierte Empfangssignal wird von der Einheit 212 an die Einheit 214 übermittelt. In der Einheit 214 wird das Datensignal D aus dem synchronisierten Empfangssignal ermittelt und an die Einheit 216 übermittelt. Durch die Einheit 216 kann nun die Anforderung zur Freigabe einer Funktion mit Hilfe des Datensignals D überprüft werden.

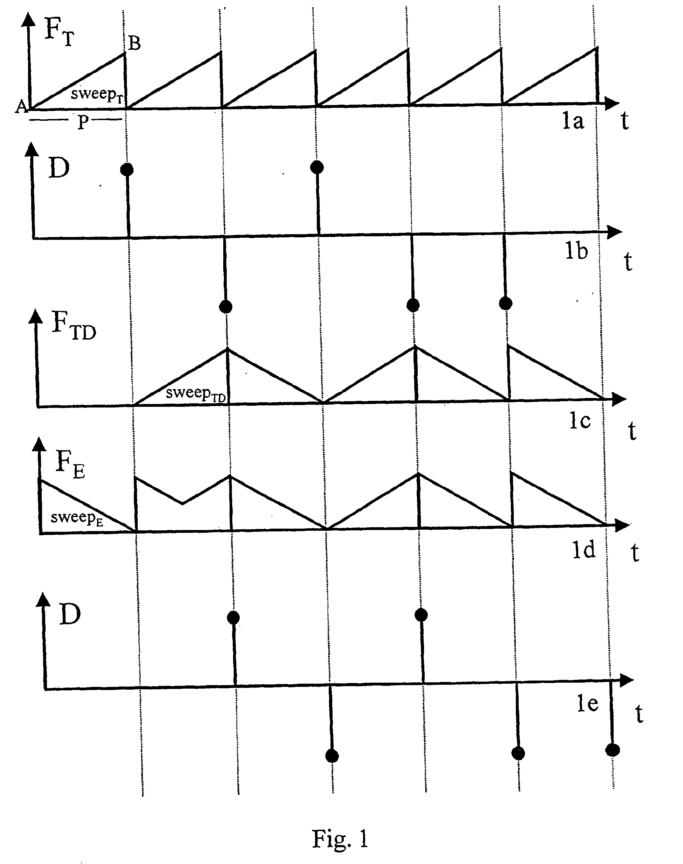

Das Empfangssignal ändert seine Frequenz entgegengesetzt zur Frequenzänderung des Trägersignals, was eine schnelle Synchronisierung der beiden Signale zur Folge hat. Zur Verdeutlichung ist in Fig. 1 der Frequenzverlauf des Trägersignals, des modulierten Trägersignals T_{D} und des Empfangssignals F_{E} sowie das Datensignal dargestellt.

In Fig. 1a ist die periodische Frequenzänderung des Trägersignals F_{T} zu erkennen. Innerhalb einer Periode P wird die Frequenz des Trägersignals F_{T} in einem Sweep sweep_{T} von einem Anfangswert A auf einen Endwert B geändert. Dieser Frequenzverlauf sweep_{T} kann, wie in Fig. 1a zu erkennen ist, linear verlaufen. Es ist aber auch möglich, einen nicht linearen Frequenzverlauf sweep_{T} zwischen der Frequenz A und der Frequenz B zu erzeugen. Die Frequenzänderung sweep_{T} wird nun periodisch wiederholt.

Das Datensignal, welches in Fig. 1b dargestellt ist, besteht aus einer Abfolge von binären Informationen. Diese Informationen werden durch einen positiven bzw. negativen Signalpegel dargestellt. Hierbei bedeutet ein positiver Signalpegel ein logisches HIGH und ein negativer Signalpegel ein logisches LOW.

Das in der Fernbedienung vorliegende Trägersignal F_{T} wird, wie in Fig. 1c zu erkennen ist, in Abhängigkeit vom Zusatzdatensignal D moduliert. Das Trägersignal kann einerseits direkt in der Fernbedienung generiert werden und andererseits kann es auch vom Fahrzeug an die Fernbedienung gesendet werden. Durch die Modulation des Trägersignals entsteht das modulierte Trägersignal F_{TD}. Der Frequenzsweep sweep_{T} wird bei einem logischen HIGH des Datensignals D beibehalten und bei einem logischen LOW des Datensignals D wird der Frequenzsweep sweep_{T} des Trägersignals F_{T} umgekehrt. Das so entstandene modulierte Trägersignal F_{TD} wird von der Fernbedienung an die Einrichtung gesendet.

In der Einrichtung wird ein Empfangssignal F_{E} erzeugt. Die Frequenz des Empfangssignals F_{E} wird periodisch und entgegengesetzt zur Frequenz des Trägersignals F_{T} geändert. Der so entstandene Frequenzsweep sweep_{E} des Empfangssignals F_{E} wird mit dem empfangenen Signal F_{TD} verglichen. Bei Frequenzgleichheit zwischen dem empfangenen Signal F_{TD} und dem Empfangssignal F_{E} wird der Frequenzsweep des Empfangssignals sweep_{E} umgekehrt und mit dem Frequenzsweep des modulierten Trägersignals sweep_{TD} synchronisiert. Durch die entgegenlaufenden Frequenzen des sweep_{T} und des sweep_{E} wird erreicht, daß diese beiden Frequenzen sehr schnell synchronisiert werden können. Nach einer Synchronisation kann der Empfangskanal des Fahrzeugs mit einem schmalen Empfangsband betrieben werden, wobei das Empfangsband mit Hilfe der synchronisierten Empfangsfrequenz nachgeregelt wird.

Wie in Fig. 1e zu erkennen ist, wird das Datensignal D einrichtungsseitig aus dem empfangenen Signal F_{TD} mit Hilfe des Empfangssignals F_{E} demoduliert. Dieses Datensignal D wird nun zur Beurteilung der Freigabeberechtigung (nicht dargestellt) genutzt. Das Datensignal D kann auch in verschlüsselter Form vorliegen, so ist z.B. an ein durch einen Rolling-CodeGenerator erzeugtes Datensignal zu denken.

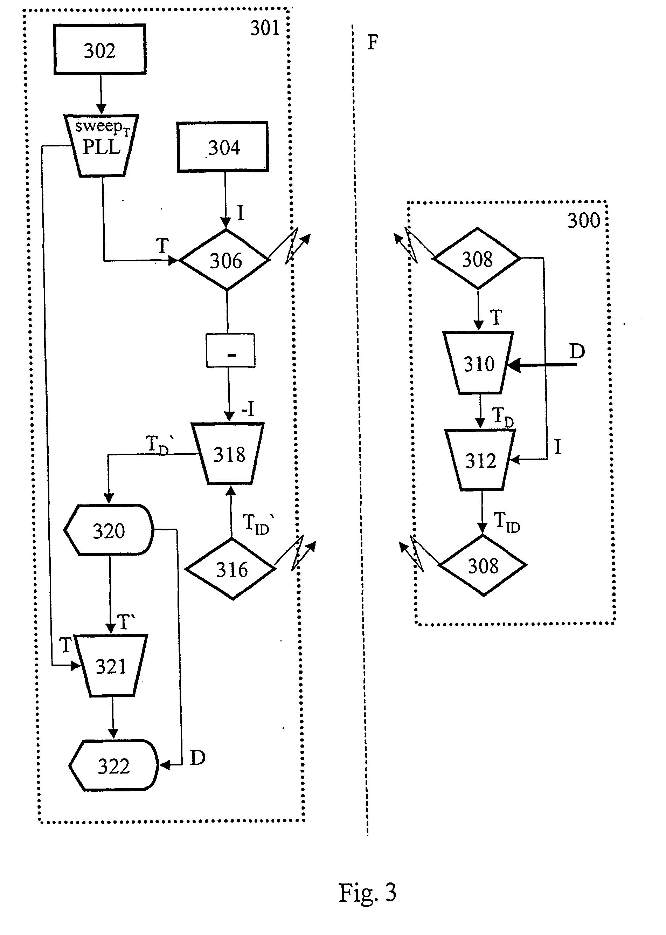

Fig. 3 zeigt den Aufbau einer Vorrichtung zur Überprüfung, ob eine Anforderung zur Freigabe einer Funktion einer Einrichtung berechtigt ist, bei welcher zusätzlich eine Information über die Entfernung zwischen Einrichtung 301 und Fernbedienung 300 aus dem empfangenen Signal ermittelt wird. In der Einrichtung 301 wird mit Hilfe der Vorrichtung 302 ein Steuerungssignal für einen Phase Locked Loop PLL erzeugt. Durch dieses Steuersignal, welches in den Regelkreis des Phase Locked Loops PLL eingespeist wird, wird ein sich periodisch änderndes Trägersignal sweep_{T} erzeugt. Das so erzeugte Trägersignal T wird der Einheit 306 zugeführt. Zusätzlich wird der Einheit 306 ein Injektionssignal I, welches in der Einheit 304 erzeugt wird, zugeführt. Das Trägersignal T als auch das Injektionssignal I wird über die Luftschnittstelle F an die Fernbedienung 300 gesendet. Der Transponder 308 empfängt das Trägersignal T als auch das Injektionssignal I. Das Trägersignal T wird der Einheit 310 zugeführt. In der Einheit 310 wird das Trägersignal T mit dem Datensignal D moduliert. Das modulierte Trägersignal T_{D} wird der Einheit 312 zugeführt. Das Injektionssignal I wird vom Transponder 308 an die Einheit 312 übermittelt. In der Einheit 312 liegen somit das Injektionssignal I als auch das modulierte Trägersignal T_{D} vor. Das modulierte Trägersignal T_{D} wird mit dem Injektionssignal I gemischt. Hierbei ist es vorteilhaft, daß das Injektionssignal I ein harmonisches Signal mit einer festen Frequenz ist. Dadurch wird das Trägersignal T_{D} um die Frequenz des Injektionssignals I verschoben. Das verschobene Trägersignal T_{ID} wird an den Transponder 308 übermittelt und durch diesen über die Luftschnittstelle F an die Einrichtung 301 gesendet. Da nun das von der Einrichtung 301 ausgesendete Trägersignal T und das vom Transponder 308 ausgesendete, modulierte Trägersignal T_{ID} um die Frequenz des Injektionssignals I gegeneinander verschoben sind, kann es auf der Luftschnittstelle F nicht zu Interferenzen zwischen den beiden Signalen kommen. In der Einrichtung 301 wird das modulierte, um die Injektionsfrequenz verschobene Trägersignal T_{ID}' von der Einheit 316 empfangen und an die Einheit 318 übermittelt. In der Einheit 318 liegt neben dem empfangenen Signal T_{ID}' zusätzlich das invertierte Injektionssignal -I vor. Mit Hilfe des invertierten Injektionssignals -I wird das empfangene Signal T_{ID}' um das Injektionssignal bereinigt. So liegt in der Einrichtung 301 am Ausgang der Einheit 318 das um das Injektionssignal I bereinigte, modulierte Trägersignal T_{D}' vor. In der Einheit 320 wird mit Hilfe eines Empfangssignals (nicht dargestellt), welches seine Frequenz im wesentlichen entgegengesetzt zur Frequenz des Trägersignals sweep_{T} ändert, und mit Hilfe einer Frequenz-Stelleinrichtung das Datensignal D aus dem empfangenen Signal T_{D}' demoduliert. Dieses Datensignal wird zur weiteren Verarbeitung von der Einheit 320 ausgegeben. Neben dem Datensignal D liegt an einem Ausgang der Einheit 320 das empfangene Trägersignal T' an. Das empfangene Trägersignal T' wird mit dem ausgesendeten Trägersignal T in der Einheit 321 verglichen. Hierbei wird insbesondere die Frequenz der beiden Signale T, T' verglichen. Aufgrund der Signallaufzeit zwischen Einrichtung 301 und Fernbedienung 300 haben sich die Frequenzsweeps des ausgesendeten Signals und des empfangenen Signals gegeneinander verschoben, wodurch die Frequenzen dieser beiden Signale unterschiedlich sind. Anhand des Frequenzunterschiedes zwischen den beiden Signale T, T' kann mit Hilfe der Einheit 321 eine Entfernungsinformation ermittelt werden. Diese Entfernungsinformation wird der Einheit 322 zugeführt, in der sie neben dem Datensignal D für die Überprüfung, ob die Anforderung zur Freigabe einer Funktion der Einheit 301 berechtigt ist, genutzt wird.

## Patentansprüche

1. Verfahren zur Überprüfung der Berechtigung einer Freigabeanforderung für eine Einrichtung, insbesondere für die Zentralverriegelung, die Wegfahrsperre oder die Alarmanlage eines Fahrzeugs, bestehend aus folgenden Schritten:
- in einer Fernbedienung (200), mittels der die Freigabeanforderung für die Einrichtung ausgelöst werden soll, wird ein Trägersignal (T) zur Verfügung gestellt, dessen Frequenz (F_{T}) periodisch geändert wird,
- das Trägersignal (T) wird mit einem vorzugsweise binären Datensignal (D) moduliert und von der Fernbedienung zur Einrichtung (201) übertragen,
- das empfangene Signal (T_{D}) wird hinsichtlich seiner Signalfrequenz (F_{TD}) mit der Frequenz eines in der Einrichtung (200) vorhandenen, seine Frequenz (F_{E}) entgegengesetzt zur Frequenz des Trägersignals (F_{T}) ändernden Empfangssignals verglichen
- bei Frequenzgleichheit zwischen der Empfangsfrequenz (F_{E}) und der modulierten Trägerfrequenz (F_{TD}) die Empfangsfrequenz (F_{E}) mit der Frequenz des modulierten Trägersignals (F_{TD}) synchronisiert,
- aus dem empfangenen Signal (T_{D}) wird das Datensignal (D) demoduliert,
- bei Übereinstimmung des Datensignals mit einem in der Einrichtung vorhandenen Vergleichsignals wird die Einrichtung des Fahrzeugs freigegeben.

2. Verfahren nach Anspruch 1,
**dadurch gekennzeichnet, daß** mit Hilfe eines Phase Locked Loops (PLL) die Empfangsfrequenz (sweep_{E}) und die Frequenz des Trägersignals (sweep_{T}) geändert werden.

3. Verfahren nach Anspruch 2,
**dadurch gekennzeichnet,**
**daß** mit Hilfe einer im Regelkreis des Phase Locked Loops (PLL) angelegten Spannung die Empfangsfrequenz (sweep_{E}) und die Frequenz des Trägersignals (sweep_{T}) periodisch geändert werden.

4. Verfahren nach einem der Ansprüche 1 bis 3
**dadurch gekennzeichnet,**
**daß** die Frequenz des Trägersignals (F_{T}) linear geändert wird.

5. Verfahren nach einem der Ansprüche 1 bis 4,
**dadurch gekennzeichnet,**
**daß** mit Hilfe eines Microcontrollers die Periodendauer der Frequenzänderung des Trägersignals (sweep_{T}) bestimmt wird.

6. Verfahren nach einem der Ansprüche 1 bis 5,
**dadurch gekennzeichnet,**
**daß** mit Hilfe eines Synchronisationssignals die Periodendauer der Änderung der Empfangsfrequenz (sweep_{E}) bestimmt wird.

7. Verfahren nach einem der Ansprüche 1 bis 5,
**dadurch gekennzeichnet,**
**daß** aus dem Verlauf des Trägersignals die Periodendauer der Änderung der Empfangsfrequenz (sweep_{E}) abgeleitet wird.

8. Verfahren nach einem der Ansprüche 1 bis 7,
**dadurch gekennzeichnet,**
**daß** das Datensignal (D) derart auf das Trägersignal (T) moduliert wird, daß die Richtung der Frequenzänderung des Trägersignals (sweep_{T}) in Abhängigkeit vom Datensignal (D) geändert wird.

9. Verfahren nach einem der Ansprüche 1 bis 7,
**dadurch gekennzeichnet,**
**daß** das Datensignal (D) derart auf das Trägersignal (T) moduliert wird, daß die Bitfrequenz des Datensignals (D) mit der Periodendauer des Trägersignals (sweep_{T}) synchronisiert wird.

10. Verfahren nach einem der Ansprüche 1 bis 9,
**dadurch gekennzeichnet,**
**daß** das Trägersignal (T) einrichtungsseitig generiert und ausgesendet wird.

11. Verfahren nach einem der Ansprüche 1 bis 10,
**dadurch gekennzeichnet,**
**daß** das Trägersignal (T) in der Fernbedienung mit Hilfe eines Transponders empfangen wird.

12. Verfahren nach einem der Ansprüche 1 bis 10,
**dadurch gekennzeichnet,**
**daß** das Trägersignal (T) in der Fernbedienung generiert wird.

13. Verfahren nach einem der Ansprüche 1 bis 12,
**dadurch gekennzeichnet,**
**daß** das Trägersignal (T) von der Einrichtung an die Fernbedienung gesendet wird,
**daß** die Frequenz des Trägersignals (F_{T}) um eine Injektionsfrequenz (F_{I}) verschoben wird,
**daß** das verschobene Trägersignal (T_{I}) mit dem Zusatzdatensignal (D) moduliert wird,
**daß** das verschobene und modulierte Trägersignal (T_{ID}) an die Einrichtung gesendet wird,
**daß** das empfangene, verschobene und modulierte Trägersignal (T_{ID}') in der Einrichtung um die Injektionsfrequenz (-F_{I}) zurückverschoben wird, und
**daß** aus dem modulierten Signal (T_{D}') die Daten (D) demoduliert werden, und
**daß** mit Hilfe einer Vergleichseineit das empfangene Trägersignal (T') mit dem ausgesendeten Trägersignal (T) verglichen wird.

14. Verfahren nach Anspruch 13,
**dadurch gekennzeichnet,**
**daß** die Frequenz des Trägersignals (sweep_{T}) mit der Frequenz des empfangenen Trägersignals (sweep_{T'}) in der Vergleichseinheit gemischt wird und daß aus der Frequenzdifferenz die Entfernung zwischen der Einrichtung und der Fernbedienung ermittelt wird.

15. Vorrichtung zur Überprüfung ob eine Anforderung zur Freigabe einer Funktion einer Einrichtung berechtigt ist, insbesondere zur Verwirklichung eines Verfahrens nach einem der Ansprüche ,
**dadurch gekennzeichnet, daß**
die Einrichtung Mittel zum Senden des Trägersignals sowie Mittel zum Empfangen eines modulierten Trägersignals aufweist, und daß die Einrichtung einen Phase Locked Loop zur Erzeugung eines seine Frequenz änderndes Trägersignals aufweist, wobei der Regelkreis des Phase Locked Loops aufgetrennt und mit einem periodischen Lade- Entladestrom beaufschlagt ist, und daß die Einrichtung eine automatische Frequenzstelleinrichtung aufweist, wobei die automatische Frequenzstelleinrichtung eine Empfangsfrequenz mit dem empfangenem Trägersignal synchronisiert, und
daß eine Fernbedienung Mittel zum Empfangen eines Trägersignals sowie zum Senden eines modulierten Trägersignals und Mittel zum Modulieren des Trägersignals mit einem Datensignal aufweist.

16. Vorrichtung nach Anspruch 15,
**dadurch gekennzeichnet, daß**
die Einrichtung Mittel zum Versenden eines Injektionssignals und Mittel zum Mischen eines empfangenen Signals mit dem Injektionssignal und Mittel zum Vergleich der Frequenz des gesendeten Trägersignals mit der Frequenz des empfangenen um das Injektionssignal und das Zusatzdatensignal bereinigten Trägersignals aufweist und daß die Fernbedienung einen Transponder aufweist, wobei der Transponder das Trägersignal und die Injektionsfrequenz empfängt und das modulierte Trägersignal aussendet und wobei die Fernbedienung Mittel zum Mischen des Trägersignals mit dem Injektionssignal sowie Mittel zum Modulieren des Trägersignals mit dem Zusatzdatensignal aufweist.

## Claims

1. A method for checking the authentication process of a release request for a device, in particular for the central locking mechanism, the anti-theft device, or the alarm assembly of a motor vehicle, comprising the following steps:
in a remote control (200), by means of which the release request for the device is activated, a carrier signal (T) is made available, whose frequency (Fᵣ) is changed periodically,
the carrier signal (T) is modulated with a preferably binary data signal (D) and transmitted from the remote control to the device (201),
the received signal (T_{D}), with regard to its signal frequency (F_{TD}) is compared with the frequency of a receiving signal, whose frequency (F_{E}) provided in the device (200) was changed contrary to the frequency of the carrier signal (Fᵣ),
with the frequency equality between the receiving frequency (F_{E}) and the modulated carrier signal (F_{TD}), the receiving frequency (F_{E}) synchronizes with the frequency of the modulated carrier signal (F_{TD}),
from the received signal (T_{D}), the data signal (D) is demodulated,
with agreement of the data signal with a comparison signal provided in the device, the device releases the motor vehicle.

2. The method according to claim 1, **characterized in that** with the aid of a phase locked loop (PLL), the receiving frequency (sweep_{E}) and the frequency of the carrier signal (sweepᵣ) are changed.

3. The method according to claim 2, **characterized in that** with the aid of voltage applied in the closed loop of the phase locked loop (PLL), the receiving frequency (sweep_{E}) and the frequency of the carrier signal (sweepᵣ) are changed periodically.

4. The method according to one of claims 1 through 3, **characterized in that** the frequency of the carrier signal (Fᵣ) is changed linearly.

5. The method according to one of claims 1 through 4, **characterized in that** with the aid of a microcontroller, the cycle duration of the frequency change of the carrier signal (sweepᵣ) is determined.

6. The method according to one of claims 1 through 5, **characterized in that** with the aid of a synchronization signal, the cycle duration of the change of the receiving frequency (sweep_{E}) is determined.

7. The method according to one of claims 1 through 5, **characterized in that** from the trend of the carrier signal, the cycle duration of the change of the receiving frequency (sweep_{E}) is derived.

8. The method according to one of claims 1 through 7, **characterized in that** the data signal (D) is modulated to the carrier signal (T), such that the direction of the frequency change of the carrier signal (sweepᵣ) is changed as a function of the data signal (D).

9. The method according to one of claims 1 through 7, **characterized in that** the data signal (D) is modulated to the carrier signal (T), such that the bit rate of the data signal (D) is synchronized with the cycle duration of the carrier signal (sweepᵣ).

10. The method according to one of claims 1 through 9, **characterized in that** the carrier signal (T) is generated and emitted on the device side.

11. The method according to one of claims 1 through 10, **characterized in that** the carrier signal (T) is received in the remote control with the assistance of a transponder.

12. The method according to one of claims 1 through 10, **characterized in that** the carrier signal (T) is generated in the remote control.

13. The method according to one of claims 1 through 12, **characterized in that**,
the carrier signal (T) is sent from the device to the remote control,
that the frequency of the carrier signal (F_{T}) is displaced to an injection frequency (F_{I}),
that the displaced carrier signal (T_{I}) is modulated with the auxiliary data signal (D),
that the displaced and modulated carrier signal (T_{ID}) is sent to the device,
that the received, displaced, and modulated carrier signal (T_{ID}') is displaced back in the device to the injection frequency (-Fᵣ), and that from the modulated signal (T_{D}'), the data (D) are demodulated, and
that with the assistance of a comparison unit, the received carrier signal (T') is compared with the emitted carrier signal (T).

14. The method according to claim 13, **characterized in that**,
the frequency of the carrier signal (sweepᵣ) is mixed with the frequency of the received carrier signal (sweepᵣ) in the comparison unit and that from the frequency difference, the distance between the device and the remote control is determined.

15. A device for checking whether a request for release of a function of a device is authenticated, in particular for performing a method according to one of the claims,
**characterized in that**
the device has means for sending the carrier signal as well as means for receiving a modulated carrier signal, and that the device has a phase locked loop for producing a carrier signal having a changed frequency, wherein the closed loop of the phase locked loop is disconnected and is impinged with a periodic charge-discharge current, and that the device has an automatic frequency adjustment device, wherein the automatic frequency adjustment device synchronize a receiving frequency with the received carrier signal, and that a remote control has means for receiving a carrier signal as well as sending a modulated carrier signal and means for modulating the carrier signal with a data signal.

16. The device according to claim 15, **characterized in that** the device has means for sending an injection signal and means for mixing a receiving signal with the injection signal and means for comparing the frequency of the sent carrier signal with the frequency of the received carrier signal adjusted to the carrier signal and the auxiliary data signal, and that the remote control has a transponder, wherein the transponder receives the carrier signal and the injection frequency and emits the modulated carrier signal and wherein the remote control has means for mixing the carrier signal with the injection signal as well as means for modulating the carrier signal with the auxiliary data signal.

## Revendications

1. Procédé de vérification de l'autorisation d'une demande de déverrouillage pour un dispositif, en particulier pour le verrouillage central, le système anti-démarrage ou le système d'alarme d'un véhicule, constitué des étapes suivantes :
- dans une télécommande (200), au moyen de laquelle doit être déclenchée la demande de déverrouillage pour le dispositif, on dispose d'un signal porteur (T) dont on modifie périodiquement la fréquence (F_{T}),
- le signal porteur (T) est modulé avec un signal de données de préférence binaire (D) et transféré par la télécommande au dispositif (201),
- on compare la fréquence (F_{TD}) du signal reçu (T_{D}) à la fréquence d'un signal de réception présent dans le dispositif (200) et modifiant sa fréquence (F_{E}) à l'opposé de la fréquence du signal porteur (F_{T}),
- en cas d'égalité entre la fréquence de réception (F_{E}) et la fréquence porteuse modulée (F_{TD}), la fréquence de réception (F_{E}) est synchronisée avec la fréquence du signal porteur modulé (F_{TD}),
- à partir du signal reçu (T_{D}), le signal de données (D) est démodulé, et
- en cas de concordance du signal de données avec un signal de comparaison présent dans le dispositif, le dispositif du véhicule est déverrouillé.

2. Procédé selon la revendication 1, **caractérisé en ce qu'**on modifie la fréquence de réception (sweep_{E}) et la fréquence du signal porteur (sweep_{T}) à l'aide d'une boucle verrouillée en phase (PLL).

3. Procédé selon la revendication 2, **caractérisé en ce qu'**on modifie de façon périodique la fréquence de réception (sweep_{E}) et la fréquence du signal porteur (sweep_{T}) à l'aide d'une tension appliquée dans le circuit régulateur de la boucle verrouillée en phase (PLL).

4. Procédé selon l'une quelconque des revendications 1 à 3, **caractérisé en ce que** la fréquence du signal porteur (F_{T}) est modifiée de façon linéaire.

5. Procédé selon l'une quelconque des revendications 1 à 4, **caractérisé en ce qu'**on détermine à l'aide d'un microcontrôleur la durée de la période de la modification de fréquence du signal porteur (sweep_{T}).

6. Procédé selon l'une quelconque des revendications 1 à 5, **caractérisé en ce qu'**on détermine à l'aide d'un signal de synchronisation la durée de la période de la modification de la fréquence de réception (sweep_{E}) .

7. Procédé selon l'une quelconque des revendications 1 à 5, **caractérisé en ce qu'**on tire du tracé du signal porteur la durée de la période de la modification de la fréquence de réception (sweep_{E}).

8. Procédé selon l'une quelconque des revendications 1 à 7, **caractérisé en ce que** le signal de données (D) est modulé sur le signal porteur (T) de sorte que la direction de la modification de la fréquence du signal porteur (sweep_{T}) soit modifiée en fonction du signal de données (D).

9. Procédé selon l'une quelconque des revendications 1 à 7, **caractérisé en ce que** le signal de données (D) est modulé sur le signal porteur (T) de sorte que la fréquence en bits du signal de données (D) soit synchronisée avec la durée de la période du signal porteur (sweep_{T}).

10. Procédé selon l'une quelconque des revendications 1 à 9, **caractérisé en ce que** le signal porteur (T) est généré et émis du côté du dispositif.

11. Procédé selon l'une quelconque des revendications 1 à 10, **caractérisé en ce que** le signal porteur (T) est reçu dans la télécommande à l'aide d'un répondeur.

12. Procédé selon l'une quelconque des revendications 1 à 10, **caractérisé en ce que** le signal porteur (T) est généré dans la télécommande.

13. Procédé selon l'une quelconque des revendications 1 à 12, **caractérisé en ce que**
le signal porteur (T) est émis par le dispositif sur la télécommande,
que la fréquence du signal porteur (F_{T}) est décalée d'une fréquence d'injection (F_{I}),
le signal porteur décalé (T_{I}) est modulé avec le signal de données supplémentaire (D),
le signal porteur décalé et modulé (T_{ID}) est envoyé au dispositif,
le signal porteur reçu, décalé et modulé (T_{ID}') est redécalé dans le dispositif d'une fréquence d'injection (-F_{I}), et
les données (D) sont démodulées à partir du signal modulé (T_{D}'), et
à l'aide d'une unité de comparaison, on compare le signal porteur reçu (T') au signal porteur émis (T).

14. Procédé selon la revendication 13, **caractérisé en ce que** la fréquence du signal porteur (sweep_{T}) est mélangée à la fréquence du signal porteur reçu (sweep_{T}.) dans l'unité de comparaison et **en ce qu'**on détermine à partir de la différence de fréquence l'éloignement entre le dispositif et la télécommande.

15. Dispositif de vérification pour savoir si une demande de déverrouillage d'une fonction d'un dispositif est autorisée, en particulier pour mettre en oeuvre un procédé selon l'une quelconque des revendications, **caractérisé en ce que** le dispositif présente des moyens d'émission du signal porteur ainsi que des moyens de réception d'un signal porteur modulé et **en ce que** le dispositif présente une boucle verrouillée en phase (PLL) pour produire un signal porteur modifiant sa fréquence, le circuit de régulation de la boucle verrouillée en phase étant séparé et alimenté par un courant périodique de charge/décharge et **en ce que** le dispositif présente un dispositif automatique de réglage de fréquence, le dispositif automatique de réglage de fréquence synchronisant une fréquence de réception avec le signal porteur reçu, et **en ce qu'**une télécommande présente des moyens de réception d'un signal porteur ainsi que des moyens d'émission d'un signal porteur modulé et des moyens pour moduler le signal porteur avec un signal de données.

16. Dispositif selon la revendication 15, **caractérisé en ce que** le dispositif présente des moyens d'émission d'un signal d'injection et des moyens de mélange d'un signal reçu avec le signal d'injection et des moyens de comparaison de la fréquence du signal porteur émis avec la fréquence du signal porteur reçu compensé du signal d'injection et du signal de données supplémentaire et **en ce que** la télécommande présente un répondeur, lequel répondeur reçoit le signal porteur et la fréquence d'injection et émet le signal porteur modulé, tandis que la télécommande présente des moyens de mélange du signal porteur avec le signal d'injection ainsi que des moyens de modulation du signal porteur avec le signal de données supplémentaire.
